# FASCICULE DE BREVET EUROPEEN

(11) **EP 0 848 480 B1**
(45) Date de publication et mention de la délivrance du brevet: **19.02.2003**
(21) Numéro de dépôt: 97120721.2
(22) Date de dépôt: 26.11.1997
(51) Int. Cl.: H02K 21/14, H02K 1/14

(54) **Transducteur électromécanique monophasé, en particulier du type horloger, et dispositif électromécanique comprenant au moins un tel transducteur**
Einphase elektromechanischer Wandler und elektromechanische Einrichtung mit wenigstens einem solchen Wandler
Single-phase electromechanical transducer and electromechanical device with at least one of such transducer

(30) Priorité: 04.12.1996 EP 96119435
(43) Date de publication de la demande: 17.06.1998
(73) Titulaire: Eta SA Fabriques d'Ebauches, 2540 Granges (CH)
(72) Inventeur: Daho, Taghezout, 1110 Morges (CH)
(74) Mandataire: Balsters, Robert

(56) Documents cités:
- EP-A- 0 143 227
- CH-A- 639 525
- CH-A- 643 704
- CH-A- 648 984
- FR-A- 1 571 115
- PATENT ABSTRACTS OF JAPAN vol. 005, no. 066 (E-055), 2 mai 1981 & JP 56 015154 A (RHYTHM WATCH CO LTD), 13 février 1981,

## Description

La présente invention concerne un transducteur électromécanique monophasé dont le stator présente une structure plane et dont le rotor comporte un aimant permanent, notamment bipolaire. En particulier, la présente invention concerne des transducteurs électromécaniques de petites dimensions, notamment adaptés aux applications horlogères.

Il est connu de l'homme du métier différents moteurs électromécaniques, en particulier dans le domaine horloger, dont le stator présente une structure plane et dont le rotor comporte un aimant permanent. Pour ce qui concerne les moteurs électromécaniques monophasés, l'homme du métier de l'horlogerie électromécanique connaît le moteur pas à pas du type "Lavet". Ce moteur comprend une plaque statorique définissant deux pôles magnétiques statoriques dont les deux épanouissements respectifs définissent un trou statorique dans lequel est situé un aimant permanent bipolaire monté sur l'axe du rotor. Les deux pôles magnétiques statoriques définissent respectivement deux oreilles de contact magnétique formant respectivement deux extrémités de la plaque statorique. Un noyau portant une bobine et présentant à ses deux extrémités également deux oreilles de contact magnétique est fixé de manière que les deux oreilles du noyau soient superposées aux deux oreilles respectives de la plaque statorique. Dans un tel moteur, le noyau portant la bobine d'alimentation est toujours située en périphérie de la plaque statorique. Le document CH 639 525 montre à la figure 1 un moteur monophasé pas à pas du type "Lavet" qui vient d'être décrit. Comme on peut le voir aux figures 1 et 2 de ce document CH 639 525, la plaque statorique définissant les deux pôles magnétiques statoriques peut servir de plaque de base ou de platine pour le montage au moins partiel de divers éléments du mécanisme horloger.

Le document CH 648 984 décrit une pièce d'horlogerie comprenant un moteur monophasé du type "Lavet" décrit ci-avant. Ce document décrit en particulier l'utilisation du stator du moteur monophasé en tant que platine ou plaque de base pour le mouvement horloger. Plusieurs éléments mécaniques et/ou électroniques sont assemblés sur le stator servant de platine. Sur la figure 1 de document CH 648 984, l'agencement du noyau portant la bobine en périphérie du mouvement d'horlogerie présente l'inconvénient de limiter l'agencement des divers éléments sur la platine, ce qui représente une contrainte limitative pour le constructeur horloger.

Lorsque le constructeur horloger place un moteur monophasé du type "Lavet" dans un mouvement dont la bobine du moteur monophasé n'est pas située en périphérie de la platine du mouvement, la plaque statorique susmentionnée forme une pièce matériellement différente de la plaque de base du mouvement comme cela apparaît à la figure 1 du document CH 643 704. Dans la construction décrite dans ce dernier document CH 643 704, le stator du moteur monophasé et la platine de base du mouvement horloger forment deux pièces matériellement distinctes, ce qui augmente le coût de fabrication et limite la miniaturisation du mouvement horloger. Le problème susmentionné de l'encombrement résultant est encore accentué lorsque le mouvement horloger comporte plusieurs moteurs monophasés.

Un but de l'invention est de fournir un transducteur électromécanique monophasé ayant un stator pouvant servir de platine pour l'assemblage d'un dispositif qui est facile à réaliser, peu onéreux et laissant au constructeur une pleine liberté dans l'agencement du dispositif, notamment dans le positionnement du rotor et de la bobine de ce transducteur monophasé.

Un autre but de l'invention est de fournir un dispositif électromécanique comprenant une pluralité de transducteurs électromécaniques dont l'un au moins est un transducteur monophasé qui présente les mêmes caractéristiques et avantages que celui proposé en relation avec le premier but susmentionné.

Un autre but de l'invention est de fournir un dispositif comprenant une pluralité de transducteurs monophasés permettant une construction compacte et peu onéreuse de ce dispositif.

A cet effet, la présente invention concerne un transducteur électromécanique monophasé de petites dimensions, en particulier du type horloger, comprenant :
- un stator en matériau magnétique;
- un seul rotor comprenant un aimant permanent;
- une bobine;
ledit stator comprenant une structure plane et un noyau autour duquel est montée ladite bobine, ladite structure plane définissant deux pôles magnétiques statoriques dont les deux épanouissements respectifs définissent un trou traversé par ledit rotor dont ledit aimant permanent est couplé magnétiquement audits deux épanouissements polaires, ledit noyau ayant ses première et deuxième extrémités reliées respectivement auxdits deux pôles magnétiques statoriques, ce transducteur étant caractérisé en ce que ledit trou traversé par ledit rotor a un bord fermé sur lui-même, ladite structure plane étant constituée par une seule et même pièce formant lesdits deux pôles magnétiques, et en ce que ladite bobine est située dans une ouverture, prévue dans ladite structure plane, dont le bord est fermé sur lui-même de telle manière que la partie de ladite structure plane définissant ledit deuxième pôle magnétique entoure la partie de cette structure plane définissant ledit premier pôle magnétique et ladite bobine en projection dans le plan général de ladite structure plane.

En particulier, il est prévu d'utiliser la présente invention pour la construction de mouvements horlogers chronographes de petites dimensions, notamment pour des montres "dame".

L'objet de l'invention se différencie du moteur pas à pas à deux rotors couplés décrit dans le document EP 0 143 227, lequel comprend un stator définissant trois pôles magnétiques statoriques et deux trous pour les deux rotors. Ce moteur est agencé pour entraîner simultanément les deux rotors en prise directe avec un même mobile. Bien que la bobine soit située à l'intérieur d'une ouverture dont le bord est fermé sur lui-même, la partie du stator définissant un premier pôle magnétique commun entre les deux trous statoriques n'est pas entouré par la partie de ce stator définissant un deuxième pôle magnétique soit pour le premier rotor, soit pour le second rotor. Ce moteur électromagnétique pas à pas concerne un type de moteur différent du transducteur selon l'objet de l'invention susmentionné. Il n'en présente pas les avantages et ne permet pas de répondre au problème qui sous-tend la présente invention et qui ressort notamment des buts de l'invention susmentionnée.

La présente invention sera décrite plus en détail ci-après à l'aide des dessins annexés à titre d'exemples nullement limitatifs, dans lesquels :
- la figure 1 représente une vue de dessus d'un premier mode de réalisation d'un transducteur monophasé selon l'invention;
- la figure 2 est une vue de dessus d'une variante du premier mode de réalisation de la figure 1;
- la figure 3 est une vue de dessus d'un dispositif électromécanique comprenant deux transducteurs monophasés selon l'invention, et
- la figure 4 est une vue de dessus schématique d'un mouvement horloger chronographe comportant, outre l'aiguillage central, trois compteurs.

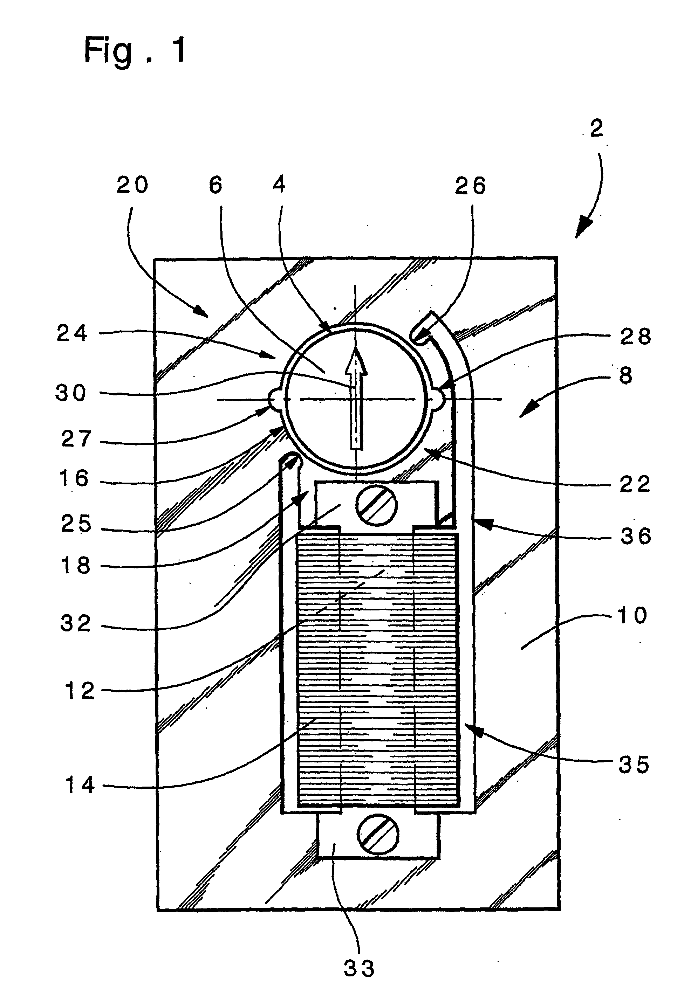

Sur la figure 1 est représenté un transducteur électromécanique monophasé 2 formé d'un rotor 4, dont seul l'aimant permanent bipolaire 6 a été représenté sur le dessin, d'un stator 8 formé par une plaque 10 en matériau magnétique doux définissant une structure plane et d'un noyau 12 portant une bobine d'alimentation 14.

Le rotor 4 traverse un trou 16 prévu dans la plaque 10 qui est formée d'une seule et même pièce, l'aimant permanent bipolaire 6 étant situé au niveau du trou 16. Cette plaque 10 définit les deux pôles magnétiques statoriques 18 et 20 présentant respectivement deux épanouissements polaires 22 et 24, ces derniers définissant ledit trou 16. Les deux pôles magnétiques 18 et 20 sont séparés l'un de l'autre au moyen de deux isthmes 25 et 26 et, notamment pour une application moteur pas à pas, il est prévu deux encoches de positionnement 27 et 28. L'axe magnétique 30 de l'aimant permanent 6 est sensiblement perpendiculaire à la direction définie par les encoches 27 et 28 lorsqu'il est dans une de ses deux positions d'énergie minimale.

Les deux extrémités 32 et 33 du noyau 12 sont respectivement reliées magnétiquement et mécaniquement aux pôles magnétiques statoriques 18 et 20 auxquels ils sont superposés et directement fixés par des vis ou des moyens de fixation similaires.

Selon l'invention, la bobine 14 montée sur le noyau 12 est située dans une ouverture statorique 35 agencée dans la plaque 10. Le bord 36 de l'ouverture statorique 35 est fermé sur lui-même et définit partiellement le pôle 18. Le pôle 20 entoure le pôle 18 et la bobine 14 en projection dans le plan de la plaque 10. Ainsi, le deuxième pôle magnétique 20 servant à la fermeture du circuit magnétique du transducteur monophasé 2 forme une plaque entourant le trou 16 et l'ouverture statorique 35. De ce fait, la plaque 10 peut avoir des dimensions quelconques et le positionnement du rotor 4 et de la bobine 14 montée sur le noyau 12 peut être prévu à des endroits quelconques prédéterminés par le constructeur du transducteur selon l'invention.

En plus des avantages d'agencement d'un tel transducteur dans un dispositif électromécanique et de rigidité d'un tel transducteur, la partie de la plaque statorique 10 définissant le pôle magnétique 20 forme un blindage magnétique du transducteur étant donné que les flux magnétiques extérieurs se propageant dans le plan de la structure plane 10 sont conduits par le pôle magnétique 20 sans couplage avec l'aimant permanent 6, quelle que soit la direction de propagation de ce flux magnétique extérieur.

Le fonctionnement électromagnétique du transducteur monophasé 2 est connu de l'homme du métier, l'alimentation d'un tel transducteur étant similaire à celle d'un transducteur monophasé pas à pas du type "Lavet" mentionné dans le préambule de la présente description.

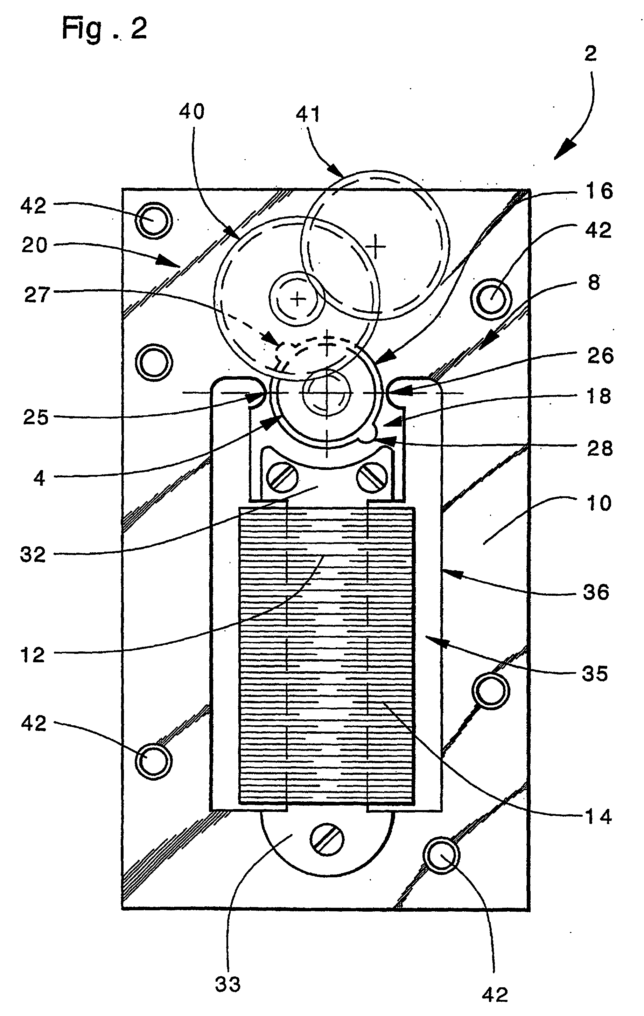

Sur la figure 2 est représenté une variante de construction du premier mode de réalisation décrit à l'aide de la figure 1. Les références déjà décrites précédemment ne seront pas à nouveau décrites ici en détail. La variante de la figure 2 diffère de la construction de la figure 1 en ce que les isthmes 25, 26 et les encoches 27, 28 sont orientés différemment relativement à l'axe du noyau 12. De plus, deux mobiles 40 et 41 sont représentés schématiquement, ces mobiles ayant chacun une extrémité montée dans un palier agencé dans la plaque 10 servant conjointement de stator et de platine pour un mouvement horloger par exemple. Divers trous 42 sont également prévus dans la plaque 10 pour la fixation de divers éléments non-représentés. Ces trous 42 peuvent être filetés ou non. On notera que le contour extérieur de la plaque 10 peut être quelconque, la représentation rectangulaire ayant été donnée uniquement par simplification du dessin.

Le transducteur électromécanique monophasé selon l'invention décrit à la figure 2 comprend donc une plaque de base 10 de forme et d'étendue quelconque et deux ouvertures, à savoir un trou 16 ayant un bord fermé sur lui-même et définissant un logement pour l'aimant permanent 6 du rotor, cet aimant étant couplé magnétiquement avec les pôles magnétiques statoriques 18 et 20, et une ouverture statorique 35 ayant également un bord 36 fermé sur lui-même. Les isthmes 25 et 26 séparant magnétiquement les deux pôles magnétiques statoriques assurent conjointement une liaison mécanique entre le premier pôle 18 et le deuxième pôle 20. Ainsi, le stator comporte uniquement deux pièces planes, à savoir la plaque 10 et le noyau 12. On notera toutefois que des formes différentes et, notamment pour la plaque 10, des structures présentant différentes épaisseurs et par exemple des fraisages et/ou enfoncements et/ou des saillies de nature quelconque peuvent être prévues sans sortir du cadre de la présente invention. De fait, la plaque 10 est une structure plane présentant un relief adapté à un mécanisme monté au moins partiellement sur cette plaque 10.

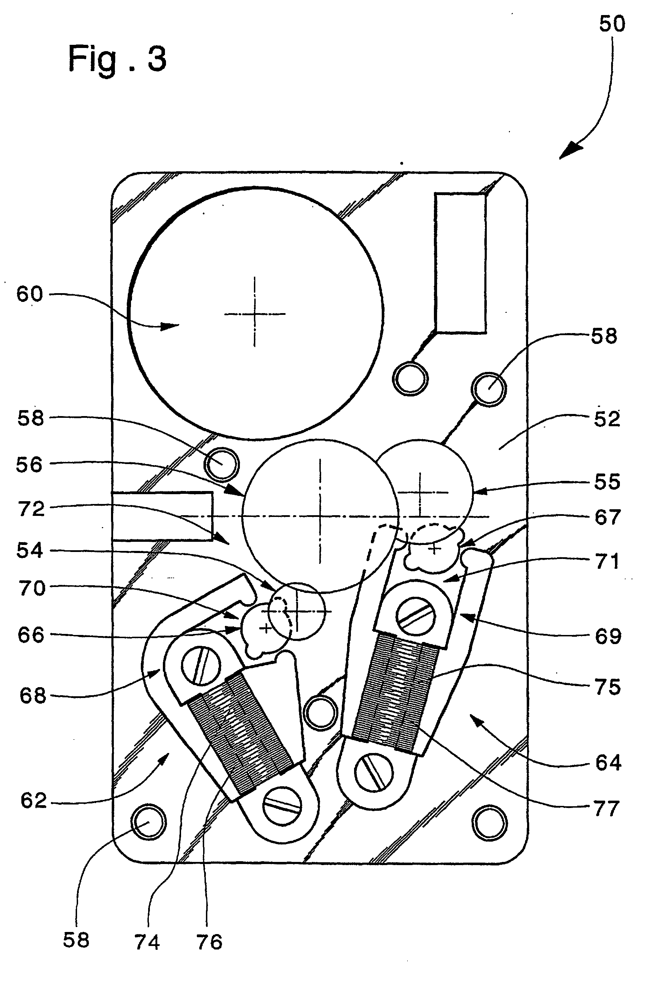

A l'aide de la figure 3, on décrira ci-après un dispositif électromécanique comprenant deux transducteurs électromécaniques monophasés selon l'invention, tels que décrits précédemment à l'aide des figures 1 et 2.

Le dispositif représenté à la figure 3 est un mouvement horloger 50 comprenant une platine 52 en matériau magnétique doux définissant une structure plane sur laquelle sont agencés divers mobiles 54, 55 et 56, des trous 58 servant au montage de divers éléments du mouvement horloger et une ouverture circulaire 60 prévue pour le logement d'une pile.

Le mouvement horloger 50 comprend des premier et deuxième transducteurs monophasés 62 et 64 de construction similaire au transducteur monophasé décrit à l'aide des figures 1 et 2. Les deux rotors respectifs (non-représentés) des deux transducteurs 62 et 64 sont logés respectivement dans deux trous 66 et 67 usinés dans la platine 52. Les première et deuxième ouvertures statoriques 68 et 69 sont respectivement prévues pour définir partiellement les premiers pôles magnétiques statoriques 70 et 71 des deux transducteurs 62 et 64. Le deuxième pôle magnétique statorique du premier transducteur 62 et le deuxième pôle magnétique statorique du deuxième transducteur 64 est un pôle magnétique commun 72 formé par la partie restante de la platine 52 relativement aux deux parties de cette platine 52 définissant les premiers pôles magnétiques statoriques 70 et 71. Bien évidemment, la platine 52 est formée d'un matériau magnétique formant le stator des deux transducteurs 62 et 64. Le deuxième pôle commun 72 sert ainsi au retour des flux magnétiques traversant les noyaux 74 et 75 formant respectivement les premier et deuxième transducteurs 62 et 64 et portant respectivement les bobines d'alimentation 76 et 77. Toutefois, les deux transducteurs 62 et 64 sont découplés magnétiquement l'un de l'autre.

La bobine 76 est située dans l'ouverture statorique 68 alors que la bobine 77 est située dans l'ouverture statorique 69. Les bords des ouvertures statoriques 68 et 69 sont fermés sur eux-mêmes. Les rotors des deux transducteurs 62 et 64 sont respectivement couplés mécaniquement aux mobiles 54 et 55 du mouvement horloger 50. Comme cela ressort clairement de la figure 3, l'agencement des deux transducteurs 62 et 64 sur la surface définie par la platine 52 est quelconque, au choix du constructeur horloger. En particulier, les bobines 76 et 77 sont situées dans une région intérieure de la platine 52 et non pas, comme dans l'art antérieur, à la périphérie de cette platine 52.

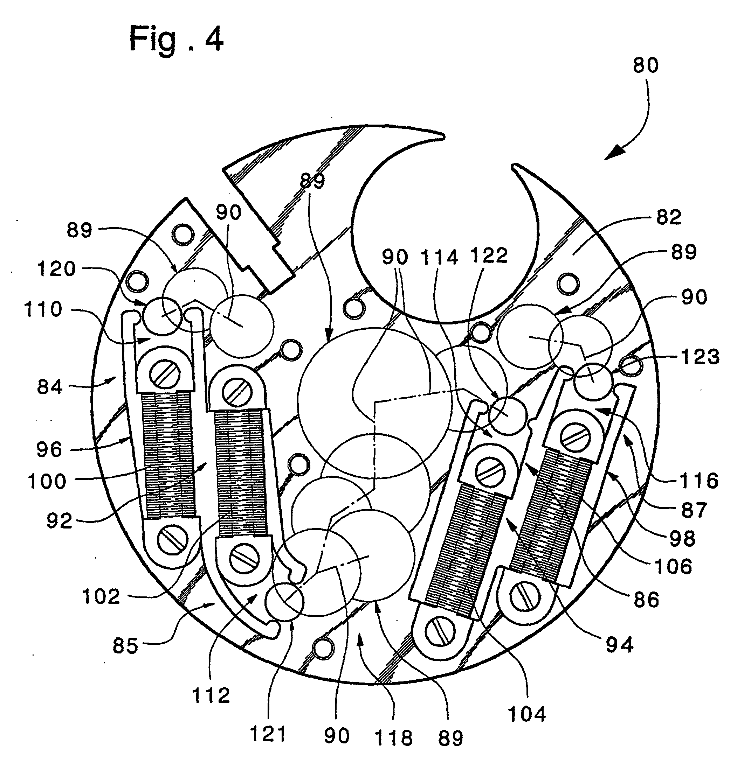

A l'aide de la figure 4, on décrira ci-après un deuxième mode de réalisation d'un dispositif électromécanique comprenant une pluralité de transducteurs électromécaniques monophasés selon l'invention.

Le mouvement horloger 80 comprend une platine 82 formé d'un matériau magnétique et servant de plaque statorique commune pour quatre transducteurs monophasés 84, 85, 86 et 87. Les quatre transducteurs 84 à 87 servent à l'entraînement de divers mobiles 89 du mouvement horloger 80. Diverses chaînes cinématiques ont été représentées à l'aide de traits tirés 90. Les transducteurs 84, 85, 86 et 87 sont des transducteurs monophasés selon la présente invention, de configuration similaire à celle décrite à l'aide de la figure 2. Ainsi, les divers éléments et parties de ces transducteurs ne seront pas à nouveau décrits ici en détails. Le mode de réalisation de la figure 4 se différencie en particulier du mode de réalisation de la figure 3 en ce que l'ouverture statorique 92, respectivement 94, prévue dans la platine 82 est commune aux deux transducteurs monophasés 84 et 85, respectivement 86 et 87. Les bords 96 et 98 des deux ouvertures statoriques 92 et 94 sont fermés sur eux-mêmes.

L'ouverture 92 entoure, en superposition dans le plan de la platine 82 formant stator, les bobines 100 et 102 des deux transducteurs 84 et 85, respectivement les deux bobines 104 et 106 des deux transducteurs 86 et 87. L'ouverture statorique 92 définit les premiers pôles magnétiques statoriques 110 et 112 des deux transducteurs 84 et 85. De même, l'ouverture statorique 94 définit les deux premiers pôles magnétiques statoriques 114 et 116 des deux transducteurs 86 et 87.

Les premiers pôles magnétiques statoriques 110, 112, 114 et 116 sont isolés magnétiquement, au sein de la platine 82, du deuxième pôle magnétique statorique commun 118, servant à la fermeture des flux magnétiques des transducteurs 84, 85, 86 et 87, au moyen d'isthmes prévus à cet effet en périphérie des trous 120, 121, 122 et 123 prévus pour l'agencement des rotors (non-représentés) des transducteurs. On notera que les encoches de positionnement et les aimants permanents des rotors n'ont pas été représentés à la figure 4 pour ne pas surcharger le dessin. Toutefois, l'homme du métier sait agencer de telles encoches de positionnement d'une manière équivalente aux figures 1 et 2 décrites précédemment.

On notera que la présente invention ne se limite pas aux seuls modes de réalisation décrits ci-avant, l'homme du métier pouvant concevoir des variantes dans le cadre de l'exercice normal et habituel de sa profession. Notamment, l'agencement des bobines et la configuration des noyaux peuvent varier. En particulier, les noyaux peuvent être courbes.

Finalement, on remarquera que la présente invention ne s'applique pas uniquement au domaine horloger, mais à toute application qui nécessite un moteur de petites dimensions, c'est-à-dire peu encombrant et aisément intégrable dans un mécanisme actionné par un tel moteur; notamment aux appareils de mesure, aux compteurs analogiques et aux appareils audio et/ou vidéo de petites dimensions.

## Revendications

1. Transducteur électromécanique monophasé (2; 62, 64; 84, 85, 86, 87) de petites dimensions, en particulier du type horloger, comprenant :
- un stator (8) en matériau magnétique;
- un seul rotor (4) comprenant un aimant permanent (6);
- une bobine (14; 76, 77; 100, 102, 104, 106);
ledit stator comprenant une structure plane (10; 52; 82) et un noyau (12; 74, 75) autour duquel est montée ladite bobine, ladite structure plane définissant deux pôles magnétiques statoriques (18, 20; 70, 71, 72; 110, 112, 114, 116, 118) dont les deux épanouissements respectifs (22, 24) définissent un trou (16; 66, 67; 120, 121, 122, 123) traversé par ledit rotor dont ledit aimant permanent est couplé magnétiquement audits deux épanouissements polaires, ledit noyau ayant ses première et deuxième extrémités reliées respectivement auxdits deux pôles magnétiques statoriques, ce transducteur étant **caractérisé en ce que** ledit trou traversé par ledit rotor a un bord fermé sur lui-même, ladite structure plane étant constituée par une seule et même pièce (10; 52; 82) formant lesdits deux pôles magnétiques, et **en ce que** ladite bobine est située dans une ouverture (35; 68, 69; 92, 94), prévue dans ladite structure plane, dont le bord (36; 96, 98) est fermé sur lui-même de telle manière que la partie de ladite structure plane définissant ledit deuxième pôle magnétique entoure la partie de cette structure plane définissant ledit premier pôle magnétique et ladite bobine en projection dans le plan général de ladite structure plane.

2. Transducteur électromécanique selon la revendication 1, **caractérisé en ce que** ledit stator définit une plaque de base ou une platine (10; 52; 82) sur laquelle sont montés au moins partiellement des éléments (40, 41; 54, 55, 56; 89) d'un dispositif électromécanique dont au moins un desdits éléments est couplé mécaniquement audit rotor dudit transducteur électromécanique.

3. Dispositif électromécanique (50; 80) comprenant une pluralité de transducteurs électromécaniques (62, 64; 84, 85, 86, 87) dont la pluralité de stators respectifs sont formés partiellement par une structure plane commune (52; 82) définissant une pluralité de trous traversés respectivement par une pluralité de rotors de ladite pluralité de transducteurs électromécaniques, ce dispositif électromécanique étant **caractérisé en ce qu'**au moins un de ladite pluralité de transducteurs est selon la revendication 1.

4. Dispositif électromécanique selon la revendication 3, **caractérisé en ce que** ladite structure plane (52; 82) commune sert de plaque de base ou de platine sur laquelle sont montés au moins partiellement des éléments (54, 55, 56; 89) de ce dispositif électromécanique.

5. Dispositif électromécanique selon la revendication 4, **caractérisé en ce que** chaque rotor de ladite pluralité de rotors est couplé mécaniquement à un desdits éléments (54, 55, 56; 89) dudit dispositif électromécanique.

6. Dispositif électromécanique (80) selon l'une des revendications 3 à 5, **caractérisé en ce que** ladite pluralité de transducteurs comprend au moins deux transducteurs (84, 85; 86, 87) selon la revendication 1, et **en ce que** les deux bobines respectives (100, 102; 104, 106) sont situées à l'intérieur d'une seule et même ouverture statorique (92; 94) de ladite structure plane (82) commune à ces deux transducteurs relativement à une projection dans le plan général de cette structure plane.

7. Dispositif électromécanique selon l'une des revendications précédentes, **caractérisé en ce que** ce dispositif forme un indicateur analogique servant à afficher la valeur d'au moins une variable déterminée.

8. Dispositif selon la revendication 7, **caractérisé en ce qu'**il forme le mouvement d'une pièce d'horlogerie, ladite au moins une variable affichée étant le temps.

## Claims

1. Monophase electromechanical transducer (2; 62, 64; 84, 85, 86, 87) of small dimensions in particular of the horological type including :
- a stator (8) made of magnetic material;
- a rotor (4) including a permanent magnet (6) ;
- a coil (14; 76, 77; 100, 102, 104, 106);
said stator including a planar structure (10; 52; 82) and a core (12; 74, 75) around which said coil is mounted, said planar structure defining two magnetic stator poles (18, 20; 70, 71; 110, 112, 114, 116, 118) whose two respective polar expansions (22, 24) define a hole (16; 66, 67; 120, 121, 122, 123) through which said rotor passes, the permanent magnet of such rotor being magnetically coupled to said two polar expansions, said core having its first and second ends respectively connected to said two magnetic stator poles, such transducer being **characterised in that** said hole through which passes said rotor has an edge closed on itself, said planar structure being formed in a single piece forming the two magnetic poles, and **in that** said coil is situated in an opening (35; 68, 69; 92, 94), provided in said planar structure, the edge (36; 96, 98) of which is closed on itself so that the part of said planar structure defining said second magnetic pole surrounds the part of this planar structure defining said first magnetic stator pole and said coil in projection in the general plane of said planar structure.

2. Electromechanical transducer according to claim 1, **characterised in that** said stator defines a base plate (10; 52; 82) onto which elements (40, 41; 54, 55, 56; 89) of an electromechanical device are at least partially mounted, at least one of said elements being mechanically coupled to said rotor of said electromechanical transducer.

3. Electromechanical device (50; 80) including a plurality of electromechanical transducers (62, 64; 84, 85, 86, 87) whose plurality of respective stators are partially formed by a common planar structure (52; 82) defining a plurality of holes through which pass respectively a plurality of rotors of said plurality of electromechanical transducers, this electromechanical device being **characterised in that** at least one of the plurality of transducers is made according to claim 1.

4. Electromechanical device according to claim 3, **characterised in that** said common planar structure (52; 82) is used as a base plate onto which elements (54, 55, 56; 89) of said electromechanical device are at least partially mounted.

5. Electromechanical device according to claim 4, **characterised in that** each rotor of said plurality of rotbrs is mechanically coupled to one of said elements (54, 55, 56; 89) of said electromechanical device.

6. Electromechanical device (80) according to any of claims 3 to 5, **characterised in that** said plurality of transducer comprises at least two transducers (84, 85; 86, 87) made according to any of claim 1 or 3, and **in that** the two respective coils (100, 102; 104, 106) are arranged in a unique and same stator opening (92; 94) of said planar structure (82) common to those two transducers with respect to a projection in the general plane of said planar structure .

7. Electromechanical device according to any of the preceding claims, **characterised in that** said device forms an analog indicator for displaying the value of at least a determined variable

8. Electromechanical device according to claim 7, **characterised in that** it forms the movement of a timepiece, said at least displayed variable being the time.

## Patentansprüche

1. Einphasiger elektromechanischer Wandler (2; 62, 64; 84, 85, 86, 87) mit kleinen Abmessungen, insbesondere vom Typ Uhrwerk, der umfaßt
- einen Stator (8) aus magnetischem Material;
- einen einzelnen Rotor (4), der einen Permanentmagneten (6) enthält;
- eine Spule (14; 76, 77; 100, 102, 104, 106);
wobei der Stator eine ebene Struktur (10; 52; 82) und einen Kern (12; 74, 75), um den die Spule montiert ist, umfaßt, wobei die ebene Struktur zwei Stator-Magnetpole (18, 20; 70, 71, 72; 110, 112, 114, 116, 118) definiert, deren zwei entsprechende Höhepunkte (22, 24) ein Loch (16; 66, 67; 120, 121, 122, 123) definieren, durch das der Rotor verläuft, dessen Permanentmagnet mit den beiden polaren Höhepunkten magnetisch gekoppelt ist, wobei der Kern mit seinem ersten und seinem zweiten Ende mit den beiden Stator-Magnetpolen verbunden ist, wobei dieser Wandler **dadurch gekennzeichnet ist, daß** das Loch, durch das der Rotor verläuft, einen auf sich selbst zurückgebogenen Rand besitzt, wobei die ebene Struktur durch ein und dasselbe Teil (10; 52; 82) gebildet ist, das die beiden Magnetpole bildet, und daß sich die Spule in einer Öffnung (35; 68, 69; 92, 94) befindet, die in der ebenen Struktur vorgesehen ist, deren Rand (36; 96, 98) auf sich selbst zurückgebogen ist, derart, daß der den zweiten Magnetpol definierende Teil der ebenen Struktur den den ersten Magnetpol definierenden Teil dieser ebenen Struktur und die in die allgemeine Ebene der ebenen Struktur vorstehende Spule umgibt.

2. Elektromechanischer Wandler nach Anspruch 1, **dadurch gekennzeichnet, daß** der Stator eine Grundplatte oder Platine (10; 52; 82) definiert, auf der wenigstens teilweise die Elemente (40, 41; 54, 55, 56; 89) einer elektromechanischen Vorrichtung montiert sind, wobei wenigstens eines der Elemente mit dem Rotor des elektromechanischen Wandlers mechanisch gekoppelt ist.

3. Elektromechanische Vorrichtung (50; 80), die mehrere elektromechanische Wandler (62, 64; 84, 85, 86, 87) enthält, wovon die mehreren jeweiligen Statoren teilweise durch eine gemeinsame ebene Struktur (52; 82) gebildet sind, die mehrere Löcher definiert, durch die jeweils mehrere Rotoren der mehreren elektromechanischen Wandler verlaufen, wobei diese elektromechanische Vorrichtung **dadurch gekennzeichnet ist, daß** wenigstens einer der mehreren Wandler wie in Anspruch 1 definiert beschaffen ist.

4. Elektromechanische Vorrichtung nach Anspruch 3, **dadurch gekennzeichnet, daß** die gemeinsame ebene Struktur (52; 82) als Grundplatte oder Platine dient, auf der wenigstens teilweise die Elemente (54, 55, 56; 89) dieser elektromechanischen Vorrichtung montiert sind.

5. Elektromechanische Vorrichtung nach Anspruch 4, **dadurch gekennzeichnet, daß** jeder Rotor der mehreren Rotoren mit einem der Elemente (54, 55, 56; 89) der elektromechanischen Vorrichtung mechanisch gekoppelt ist.

6. Elektromechanische Vorrichtung (80) nach einem der Ansprüche 3 bis 5, **dadurch gekennzeichnet, daß** die mehreren Wandler wenigstens zwei Wandler (84, 85; 86, 87) nach Anspruch 1 umfassen und daß sich die beiden jeweiligen Spulen (100, 102; 104, 106) in bezug auf einen Vorsprung in der allgemeinen Ebene dieser ebenen Struktur in ein und derselben Statoröffnung (92; 94) der diesen beiden Wandlern gemeinsamen ebenen Struktur (82) befinden.

7. Elektromechanische Vorrichtung nach einem der vorhergehenden Ansprüche, **dadurch gekennzeichnet, daß** diese Vorrichtung eine analoge Anzeige bildet, die der Anzeige des Wertes wenigstens einer bestimmten Variable dient.

8. Vorrichtung nach Anspruch 7, **dadurch gekennzeichnet, daß** sie das Werk eines Zeitmeßgeräts bildet, wobei die wenigstens eine angezeigte Variable die Zeit ist.
